# EUROPEAN PATENT SPECIFICATION

(11) **EP 3 336 216 B1**
(45) Date of publication and mention of the grant of the patent: **18.09.2019**
(21) Application number: 15901078.4
(22) Date of filing: 18.12.2015
(51) Int. Cl.: C23C 8/10, B23K 26/073, B23K 26/352, B23K 103/04

(54) **STEEL PLATE COLORING DEVICE AND COLORING METHOD**
STAHLPLATTENFÄRBUNGSVORRICHTUNG UND FÄRBUNGSVERFAHREN
DISPOSITIF DE COLORATION DE TÔLES D'ACIER ET PROCÉDÉ DE COLORATION

(30) Priority: 12.08.2015 KR 20150113636
(43) Date of publication of application: 20.06.2018
(73) Proprietor: POSCO, Pohang-si, Gyeongsangbuk-do 37859 (KR)
(72) Inventor: KUEON, Yeong-Seob, Pohang-si Gyeongsangbuk-do 37877 (KR)
(74) Representative: Potter Clarkson
(86) International application number: PCT/KR2015/013936
(87) International publication number: WO 2017/026596

(56) References cited:
- EP-A1- 1 310 321
- WO-A1-02/09904
- CN-A- 101 775 570
- JP-A- 2000 254 790
- KR-A- 20060 005 212
- KR-A- 20150 000 927
- US-A- 5 854 460
- US-A1- 2002 009 839
- OKAMOTO T ET AL: "Development of line-shaped optical system for green laser annealing used in the manufacture of low-temperature poly-Si thin-film transistors", APPLIED OPTICS, vol. 45, no. 19, 1 July 2006 (2006-07-01), pages 4709-4714, XP001243938, OSA Publishing, Washington, DC [US] ISSN: 0003-6935, DOI: 10.1364/AO.45.004709

## Description

### [Technical Field]

The present disclosure relates to a steel plate coloring device and coloring method, and more particularly, to a technique used to color a surface of a steel plate using a laser.

### [Background Art]

Generally, as a method of applying color to a stainless steel plate, a method of expressing a color by forming a chromium oxide layer on a surface of a stainless steel plate using a chemical process, or a method of expressing a color by coating a surface of a stainless steel plate with titanium in a vacuum have been widely used.

The methods described above have disadvantages in terms of cost and environmental factors, as environmental pollutants may be emitted or an operation related thereto may be performed in vacuum.

Recently, a technique of imparting color to a surface of a stainless steel plate by forming a chromium oxide layer according to a difference in energy density of a laser irradiated onto a surface of a stainless steel plate has been introduced. That is, a method of locally imparting a color to a surface of a stainless steel plate having been fixed is introduced in Chinese Patent Laid-Open No. 101775570.

The above described method is a method of irradiating a point laser beam onto a surface of a steel plate for coloring. Here, a laser is irradiated using a point laser irradiating unit irradiating a point laser. In order to color the entirety of a surface of a steel plate, coloring is performed while the point irradiating portion should be moved in a width direction of a steel plate, and thus, there are limitations.

In other words, since coloring a steel plate being continuously transferred has limitations, coloring should be performed by irradiating a laser onto a steel plate while the steel plate is in a stopped state. Moreover, since a point laser is irradiated, coloring should be performed while the point irradiating portion is moved in a width direction of a steel plate.

Therefore, a research into a steel plate coloring device for resolving the problems or limitations described above is required.

### [Disclosure]

### [Technical Problem]

An aspect of the present disclosure may provide a steel plate coloring device and coloring method capable of improving productivity by performing rapid coloring in a width direction of a steel plate.

### [Technical Solution]

According to an aspect of the present disclosure, a steel plate coloring device is defined in claim 1. Preferred embodiment of the device are defined in claims 2 to 9. In particular, the irradiation support unit of the steel plate coloring device may further include a motor coupled to the body unit, and the line member may be connected to a rotation shaft of the motor and may adjust a position by means of rotation.

The line member of the steel plate coloring device may have a center portion in a width direction of the steel plate, connected to the rotation shaft of the motor.

The line member of the steel plate coloring device may be provided as a plurality of line members, and may be provided to be spread to correspond to the width of the steel plate.

The irradiation support unit of the steel plate coloring device may further include a driving cylinder coupled to the body unit, and a guide tab formed to protrude from an upper end or a lower end of the line member, and slidingly inserted into a guide groove formed in the body unit, and the line member, provided as a plurality of line members, may be connected to one end of the driving cylinder, provided as a plurality of driving cylinders, and may adjust a position by means of linear movement.

The irradiation unit of the steel plate coloring device may be provided in at least one of an upper member of the body unit in an upper surface of the steel plate and a lower member of the body unit in a lower surface of the steel plate.

The irradiation support unit of the steel plate coloring device may include a surface member provided to allow the plurality of point irradiation units to be disposed on a plane.

The irradiation unit of the steel plate coloring device may further include an irradiation control portion electrically connected to a point irradiation unit, and individually adjusting energy density of laser irradiated by the point irradiation unit provided as a plurality of point irradiation units.

The body unit of the steel plate coloring device may include a base member, and a guide roller coupled to the base member, and provided to be in contact with a lateral edge of the steel plate so as to guide movement of the steel plate.

According to another aspect of the present disclosure, a steel plate coloring method is defined in claim 10.

### [Advantageous Effects]

According to an exemplary embodiment in the present disclosure, a steel plate coloring device and coloring method is advantageous in that coloring is performed by simultaneously irradiating lasers onto a surface of a steel plate in a width direction.

According to this, a surface of a steel plate, continuously transferred, is colored, and a surface of a steel plate may be colored at high speed, so productivity of a steel plate may be improved.

Furthermore, lasers are simultaneously irradiated to correspond to a width of a steel plate, so coloring on a steel plate having various widths may be quickly performed.

### [Description of Drawings]

FIG. 1 is a front view illustrating a steel plate coloring device according to the present invention.
FIGS. 2 and 3 are plan views illustrating exemplary embodiments in which a position of an irradiation unit is adjusted to correspond to a width of a steel plate by means of rotational movement in a steel plate coloring device according to the present invention.
FIG. 4 is a plan view illustrating an exemplary embodiment in which a position of an irradiation unit is adjusted to correspond to a width of a steel plate by means of linear movement in a steel plate coloring device according to the present invention.
FIG. 5 is a perspective view illustrating a line member in a steel plate coloring device according to the present invention.
FIG. 6 is a perspective view illustrating a surface member in a steel plate coloring device according to the present invention.
FIG. 7 is a flow chart illustrating a steel plate coloring method according to the present invention.

### [Best Mode for Invention]

Hereinafter, exemplary embodiments of the present invention will be described in detail with reference to the accompanying drawings. Meanwhile, the invention is not limited to the suggested embodiments. The scope of the invention is defined by the claims.

In the following description, components having the same function within the same scope illustrated in the drawings of the embodiments are illustrated using the same reference numerals.

A steel plate coloring device and coloring method according to the present invention is a technique of coloring a surface of a steel sheet S using a laser, and particularly, to a technique of coloring a surface of a steel sheet S in a width direction by simultaneously irradiating lasers thereonto.

According thereto, a surface of the steel plate S, being continuously transferred, is colored, and the surface of the steel plate S is colored at high speed, so productivity in the manufacturing of the steel plate S may be improved.

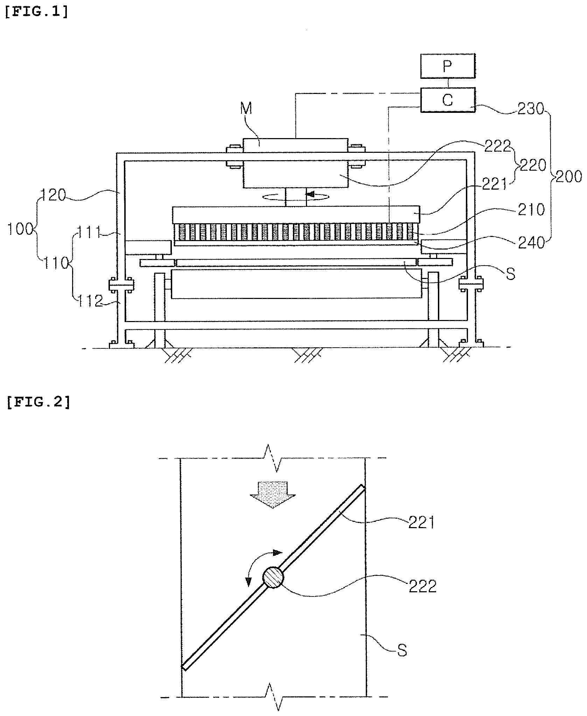

In detail, FIG. 1 is a front view illustrating a steel plate coloring device according to the present invention. Referring to this, a steel plate coloring device according to an exemplary embodiment of the present invention includes a body unit 100 provided on a transfer path of the steel plate S, and an irradiation unit 200 provided in the body unit, and irradiating, on a surface of the steel plate S, a line-shaped laser in a width direction of the steel plate S, so as to provide color to the surface of the steel plate S.

In other words, the steel plate coloring device according to the present invention includes the body unit 100 and the irradiation unit 200, in order for lasers to be simultaneously irradiated in a width direction of the steel plate S (for example, a stainless steel plate) for coloring.

The body unit 100 acts as a body having an irradiation unit 200, to be described later, and the like, and is provided on a transfer path of the steel plate S. Thus, the irradiation unit 200 may perform coloring on the steel plate S.

In addition, the body unit 100 may include a base member 110, a guide roller 120, and the like, to allow a position of the steel plate S to not be changed in a width direction.

In other words, the body unit 100 of the steel plate coloring device according to an exemplary embodiment of the present invention may include a base member 110, and a guide roller 120 coupled to the base member 110, and provided to be in contact with a lateral edge of the steel plate S so as to guide movement of the steel plate S.

In this regard, when the irradiation unit 200 irradiates laser onto the steel plate S to be colored, a portion to be colored is maintained in a constant position, so a quality of coloring with respect to the steel plate S may be improved.

In addition, regarding coloring with respect to the steel plate S, rather than a solid color, different colors to be expressed may be obtained by controlling a thickness of an oxide layer, depending on irradiation density of laser. Thus, colors of the steel plate S may be different from each other, according to a position of the steel plate S in a width direction, so it is required to maintain a constant position of the steel plate S.

To this end, the guide roller 120 is provided to be coupled to the base member 110, and may be provided to be in contact with a lateral edge of the steel plate S. In addition, in order to reduce frictional force when the guide roller is in contact with a lateral edge of the steel plate S, the guide roller may be coupled to the base member 110 to be rotated.

Moreover, the guide roller may be coupled to the base member 110 to be moved in order to adjust a position according to a width of the steel plate S. A configuration for this is not illustrated in the drawing, but the guide roller 120 may be provided to be close to or to be spaced apart from the steel plate S by various actuators such as a pneumatic or hydraulic cylinder, a motor 222, or the like.

In addition, the base member 110 may be provided to be divided into an upper member 111 provided in an upper portion and a lower member 112 provided in a lower portion. Here, when the irradiation unit 200 is provided on an upper surface of the steel plate S, the upper member 111 may be coupled to the irradiation unit 200. When the irradiation unit 200 is provided on a lower surface of the steel plate S, the lower member 112 may be coupled to the irradiation unit 200.

Moreover, although not illustrated in the drawing, the body unit 100 may further include an air injection device. In this regard, a color formed on a surface of the steel plate S is determined by not only energy density of the laser irradiated onto the surface of the steel plate S, but also a partial pressure of oxygen on the surface of the steel plate S.

In other words, factors for determining a thickness of a chromium oxide layer formed on the surface of the steel plate S may be a temperature of a surface of the steel plate S, a partial pressure of oxygen on a surface of the steel plate S, and energy density of laser irradiated onto a surface of the steel plate S.

Among the factors described above, in detail, in the case of oxygen, a difference in a partial pressure of oxygen may occur during laser irradiation. Thus, air may be additionally injected through an air knife.

In this case, a region into which the air is injected is preferably a region of the steel plate S, which a laser beam hits.

In addition, here, in order to form the chromium oxide layer, irradiation energy density of the laser is about 10³ to 10⁶ W/cm², and the laser time is preferably set to be within a range of about 10⁻³ to 10°.

The irradiation unit 200 serves to irradiate the laser onto the steel plate S to allow the steel plate S to be colored. For example, the laser is irradiated onto the steel plate S and a chromium oxide layer is formed on the steel plate S, so a unique color may be expressed.

In detail, the irradiation unit 200 according to the present invention irradiates the line-shaped laser onto the steel plate S in a width direction of the steel plate, so coloring in a width direction of the steel plate S may be performed simultaneously. To this end, the irradiation unit 200 includes a point irradiation unit 210, an irradiation support unit 220, and a linear lens portion 240.

In other words, the irradiation unit 200 of the steel plate coloring device according to an exemplary embodiment of the present invention includes the irradiation support unit 220 coupled to the body unit 100, the point irradiation member provided as a plurality of point irradiation units 210 in parallel in the irradiation support unit 220, and emitting a laser, and the linear lens portion 240 provided to be connected to ends of the plurality of point irradiation units 210 from which laser is emitted.

Here, the point irradiation member irradiating point laser is provided as a plurality of point irradiation units 210 in a width direction of the steel plate S. In this regard, irradiation of laser in a width direction of the steel plate S is allowed to be simultaneously performed.

In other words, irradiation of laser in a width direction of the steel plate S is simultaneously performed, so coloring in a width direction of the steel plate S is allowed to be simultaneously performed.

As described above, the point irradiation member is disposed in parallel in a width direction of the steel plate S. Furthermore, the linear lens portion 240 is provided as an intermediate medium, so laser irradiated from the point irradiation unit 210 is absorbed and a linear laser is irradiated onto the steel plate S.

According to this, continuously coloring with respect to the steel plate S, being continuously transferred, is able to be performed, so the surface of the steel plate S is continuously colored without stopping the steel plate S and the steel plate S is able to be rapidly produced.

To this end, the irradiation unit 200 includes an irradiation support unit 220 having the point irradiation member provided as a plurality of point irradiation units 210 in a width direction of the steel plate S.

The irradiation support unit 220 may include a line member 221 provided to allow the point irradiation units 210 to be arranged linearly, or a surface member 225 provided to allow the point irradiation units 210 to be arranged on a plane.

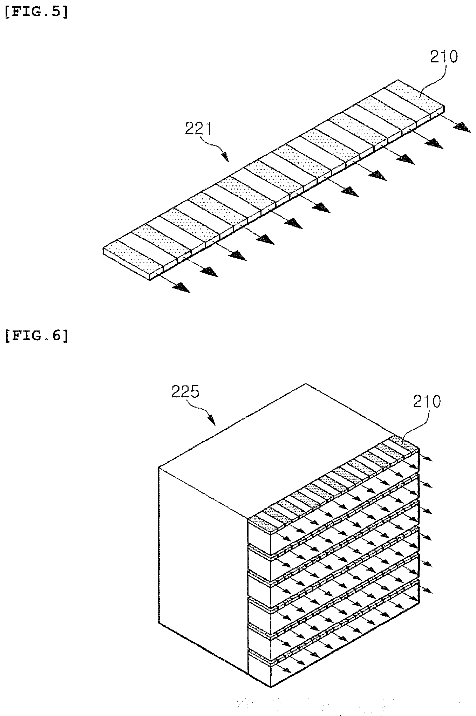

The line member 221 is illustrated in FIG. 5. In other words, FIG. 5 is a perspective view illustrating the line member 221 in a steel plate coloring device according to the present invention. Referring to this, the irradiation support unit 220 of the steel plate coloring device according to an exemplary embodiment of the present invention may include the line member 221 provided to allow the plurality of point irradiation units 210 to be arranged linearly, and of which a position is adjusted to correspond to a width of the steel plate S.

As described above, when the irradiation support unit 220 has the line member 221, a position of the line member 221 may be adjusted to allow the steel plate S having various widths to be colored. A detailed description thereof will be described later with reference to FIGS. 2 through 4.

The surface member 225 is illustrated in FIG. 6. In other words, FIG. 6 is a perspective view illustrating the surface member 225 in the steel plate coloring device according to the present invention. Referring to this, the irradiation support unit 220 of the steel plate coloring device according to an exemplary embodiment of the present invention may include the surface member 225 provided to allow a plurality of point irradiation units 210 to be disposed on a plane.

When the irradiation support unit 220 includes the surface member 225, gradual coloring in a direction of progress of the steel plate S is allowed. In other words, a portion of an oxide layer is only formed on the upstream side in the direction of progress of the steel plate S, and the remainder of the oxide layer is formed on the downstream side in the direction of progress of the steel plate S, so a surface of the steel plate S may be allowed to be gradually colored.

Furthermore, the irradiation unit 200 is not limited to only irradiating the laser on an upper surface of the steel plate S to be colored, and may perform coloring on the steel plate S by irradiating the laser onto a lower surface of the steel plate S or both of an upper surface and a lower surface of the steel plate S.

In other words, the irradiation unit 200 of the steel plate coloring device according to an exemplary embodiment of the present invention is provided in at least one of an upper member 111 of the body unit on an upper surface of the steel plate S and a lower member 112 of the body unit on a lower surface of the steel plate S.

In addition, the linear lens portion 240 serves to convert a point laser, irradiated by a plurality of point irradiation units 210, into a linear laser.

Here, the linear lens portion 240 is provided in end portions of point irradiation units 210, disposed in parallel in a width direction of the steel plate S and irradiating the lasers.

In other words, the linear lens portion is provide in a long shape connecting end portions of the plurality of point irradiation units 210, and thus serves as an intermediate medium converting a point laser emitted by the plurality of point irradiation units 210 into a linear laser.

Meanwhile, the steel plate coloring device according to the present invention may further include an irradiation control portion 230 to adjust a color with which the steel plate S is colored.

In other words, the irradiation unit 200 of the steel plate coloring device according to an exemplary embodiment of the present invention may further include an irradiation control portion 230 electrically connected to the point irradiation unit 210, and individually adjusting energy density of laser irradiated by the plurality of point irradiation units 210.

In addition, the irradiation control portion 230 is connected to power P, and thus receives electrical energy and transfers the electrical energy to the irradiation unit 200.

As described above, by means of the irradiation control portion 230, laser is irradiated onto the surface of the steel plate S with various levels of energy density, so a chromium oxide layer having a varying thickness is formed. Thus, through an interference phenomenon by light of different wavelengths, various colors may be provided.

Furthermore, various colors are able to be provided according to a transfer direction of the steel plate S and a width direction of the steel plate S, so a specific figure, shape, or the like may be expressed on the steel sheet S.

FIG. 2 is a plan view illustrating an exemplary embodiment in which a position of an irradiation unit 200 is adjusted to correspond to a width of the steel plate S by means of rotational movement in a steel plate coloring device according to the present invention. Referring thereto, the irradiation support unit 220 of the steel plate coloring device according to an exemplary embodiment of the present invention may further include the motor 222 coupled to the body unit 100, and the line member 221 is connected to a rotation shaft of the motor 222 and adjusts a position by means of rotation.

According to this, coloring of the steel plate S in a width direction is simultaneously performed. Furthermore, coloring of the steel plate S having various widths is able to be performed.

In other words, the irradiation support unit 220 adjusts a position by means of rotation of the line member 221, so the line member 221 is able to be placed to correspond to a width of the steel plate S.

To this end, the motor 222 is connected to the line member 221 to allow the line member 221 to be rotated. In addition, the motor 222 is electrically connected to the irradiation control portion 230, or the like, described previously, so an angle of rotation of the line member 221 may be controlled to correspond to a width of the steel plate S by the irradiation control portion 230.

Furthermore, in order to stably rotate the line member 221 by the motor 222, the motor 222 is able to be coupled to a center portion of the line member 221. In other words, regarding the line member 221 of the steel plate coloring device according to an exemplary embodiment of the present invention, the center portion of the line member in a width direction of the steel plate S may be connected to a rotation shaft of the motor 222.

However, it is not limited, and the rotation shaft of the motor 222 may be provided to be coupled to one end of the line member 221, or the like to allow the line member 221 to be rotated.

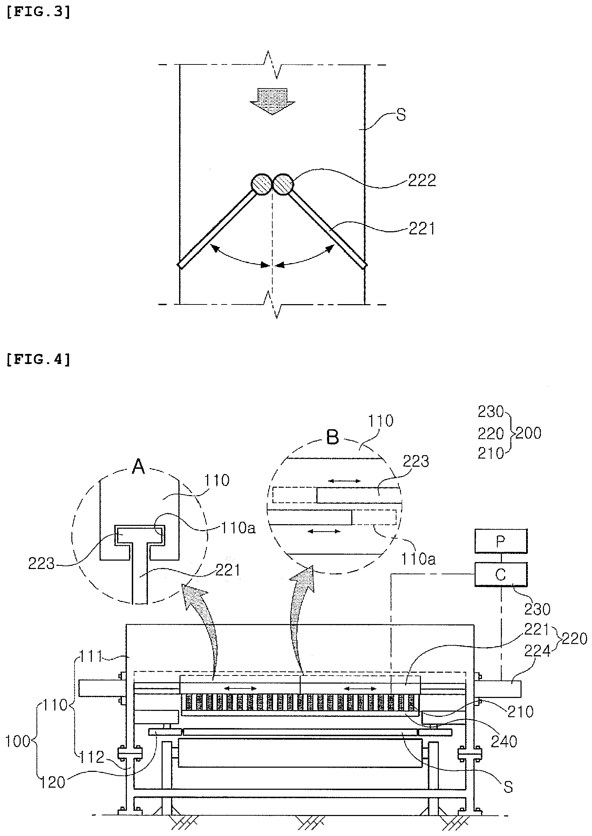

FIG. 3 is a plan view illustrating an exemplary embodiment in which a position of an irradiation unit 200 is adjusted to correspond to a width of the steel plate S by means of rotational movement in a steel plate coloring device according to the present invention. In other words, an exemplary embodiment is illustrated, in which, when the line member 221 is provided as a plurality of line members, the plurality of line members 221 are provided to be spread to correspond to a width of the steel plate S.

Referring to FIG. 3, the line member 221 of the steel plate coloring device according to an exemplary embodiment of the present invention is provided as a plurality of line members, and is provided to be spread to correspond to a width of the steel plate S.

In other words, each of the plurality of line members 221 may be placed to be rotated, while a region in which laser is able to be irradiated is divided thereby. The line members are placed to be rotated to correspond to a width of the steel plate S with respect to only each region, so a position may be changed to correspond to a width of the steel plate S more quickly.

FIG. 4 is a plan view illustrating an exemplary embodiment in which a position of an irradiation unit 200 is adjusted to correspond to a width of the steel plate S by means of linear movement in a steel plate coloring device according to the present invention. Referring to this, the irradiation support unit 220 of the steel plate coloring device according to an exemplary embodiment of the present invention may further include a driving cylinder 224 coupled to the body unit 100, and a guide tab 223 formed to protrude from an upper end or a lower end of the line member 221, and slidingly inserted into a guide groove 110a of the body unit 100. In addition, the line member 221 is provided as a plurality of line members, and the plurality of line members are connected to one ends of a plurality of driving cylinders 224, respectively, so a position is adjusted by means of linear movement.

According to this, by means of linear motion of the line member 221, a position is able to be adjusted to correspond to a width of the steel plate S.

In other words, the driving cylinder 224 coupled to the body unit 100 pushes or pulls the line member 221, so a position is able to be adjusted by means of linear movement of the line member 221.

In detail, in order to guide linear movement of the line member 221, a guide tab 223 is included in the line member 221, and a guide groove 110a into which the guide tab 223 is inserted is formed in the body unit 100. In portion A of FIG. 4, the configurations described above are enlarged and illustrated as a side cross-sectional view.

Furthermore, the line member 221 is provided as a plurality of line members, and a position is adjusted by means of linear movement. In portion B of FIG. 4, the configurations described above are enlarged and illustrated as a plan cross-sectional view.

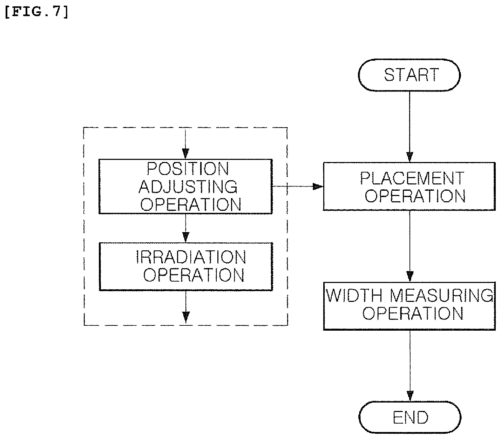

FIG. 7 is a flow chart illustrating a steel plate coloring method according to the present invention. Referring to this, a steel plate coloring method according to another exemplary embodiment of the present invention may include a placement operation of placing an irradiation unit 200, irradiating line-shaped laser onto a transfer path of the steel plate S, on the steel plate S; and an irradiation operation of irradiating lasers simultaneously onto a region corresponding to a width of the steel plate S continuously transferred.

In other words, in order to simultaneously perform coloring on a region corresponding to a width of the steel plate S, the placement operation, the irradiation operation, and the like may be included.

The placement operation is an operation of placing the irradiation unit 200 irradiating the laser in a width direction of the steel plate S.

Here, the placement operation may include detailed operations, a width measuring operation and a position adjusting operation, to place the irradiation unit 200 so as to allow only a region corresponding to a width of the steel plate S to be colored.

In other words, the placement operation of the steel plate coloring method according to another exemplary embodiment of the present invention may include a width measuring operation of measuring a width of the steel plate S, and a position adjusting operation of adjusting a position of the irradiation unit 200 to a region corresponding to a width of steel plate S having been measured.

Here, in the width measuring operation, a width of the steel plate S may be sensed by a sensor, or the like, electrically connected to the irradiation control portion 230 described previously.

In addition, in the position adjusting operation, a position of the line member 221 is adjusted by driving force generated by the motor 222, the driving cylinder 224, or the like, electrically connected to the irradiation control portion 230. In other words, by means of the motor 222, the line member 221 is rotated to adjust a position. By means of the driving cylinder 224, the line member 221 is linearly moved to adjust a position thereof.

The irradiation operation is an operation of performing coloring on the steel plate S. To this end, the irradiation unit 200 simultaneously irradiates lasers onto a region corresponding to a width of the steel plate S to perform coloring.

In addition, the irradiation unit 200 is electrically connected to the irradiation control portion 230, so energy density of irradiated laser is adjusted to adjust a color expressed on the steel plate S.

## Claims

1. A steel plate coloring device, comprising:
a body unit (100) provided on a transfer path of a steel plate (S); and
an irradiation unit (200) provided in the body unit (100), which irradiates, onto a surface of the steel plate (S), a line-shaped laser in a width direction of the steel plate (S) so as to provide color to the surface of the steel plate (s),
wherein the irradiation unit (200) includes:
an irradiation support unit (220) coupled to the body unit (100);
a point irradiation member provided as a plurality of point irradiation units (210) disposed in parallel in the irradiation support unit (220), and emitting the laser; and
a linear lens portion (240) provided to be connected to ends of the plurality of point irradiation units (210) from which the laser is emitted;
**characterised in that** the irradiation support unit (220) is coupled to the body unit (100); and **in that**
the irradiation support unit (220) includes a line member (221) provided to allow the plurality of point irradiation units (210) to be arranged linearly, and of which a position is adjustable to correspond to a width of the steel plate (S).

2. The steel plate coloring device of claim 1, wherein the irradiation support unit further includes:
a motor (M, 222) coupled to the body unit (100), and
the line member (221) is connected to a rotation shaft of the motor (M, 222) to adjust the position by means of rotation.

3. The steel plate coloring device of claim 2, wherein the line member (221) has a center portion in a width direction of the steel plate (S) connected to the rotation shaft of the motor (M, 222).

4. The steel plate coloring device of claim 2, wherein the line member is provided as a plurality of line members (221), and is provided to be spread to correspond to the width of the steel plate (s).

5. The steel plate coloring device of claim 1, wherein the irradiation support unit (210) further includes:
a driving cylinder (224) coupled to the body unit (100); and
a guide tab (223) formed to protrude from an upper end or a lower end of the line member (221), and slidingly inserted into a guide groove (110a) formed in the body unit (100) and
the line member, provided as a plurality of line members (221), is connected to one end of the driving cylinder (224), provided as a plurality of driving cylinders (224), so as to adjust a position by means of linear movement.

6. The steel plate coloring device of claim 1, wherein the irradiation unit (200) is provided in at least one of an upper member (120) of the body unit (100) in an upper surface of the steel plate (S) and a lower member (112) of the body unit (100) in a lower surface of the steel plate (S).

7. The steel plate coloring device of claim 1, wherein the irradiation support unit (220) includes: a surface member (225) provided to allow the plurality of point irradiation units (210) to be disposed on a plane.

8. The steel plate coloring device of claim 1, wherein the irradiation unit (200) includes: an irradiation control portion (230) electrically connected to a point irradiation unit (210), and individually adjusting energy density of laser irradiated by the point irradiation member provided as a plurality of point irradiation units (210).

9. The steel plate coloring device of claim 1, wherein the body unit includes:
a base member (110); and
a guide roller (120) coupled to the base member (110), and provided to be in contact with a lateral edge of the steel plate (S) so as to guide movement of the steel plate (S).

10. A steel plate coloring method using a steel coloring device as defined in any of claims 1 to 9, comprising:
a placement operation of placing an irradiation unit (200) including an irradiation support unit (220); irradiating a line-shaped laser onto a transfer path of a steel plate (S) by
an irradiation operation of irradiating lasers from a point irradiation member provided as a plurality of point irradiation units (210)disposed in parallel in the irradiation support unit (220), and emitting the lasers simultaneously through a linear lens portion (240) connected to ends of the plurality of point irradiation units (210) onto a region corresponding to a width of the steel plate (S) being continuously transferred,
**characterised in that** the placement operation includes:
a width measuring operation of measuring the width of the steel plate (S); and
a position adjusting operation of adjusting a position of the irradiation unit (200) to the region corresponding to the width of the steel plate (S) having been measured.

## Patentansprüche

1. Stahlblechfärbungsvorrichtung, Folgendes umfassend:
eine Körpereinheit (100), die auf einer Übertragungsbahn eines Stahlblechs (S) bereitgestellt ist; und
eine Bestrahlungseinheit (200), die in der Körpereinheit (100) bereitgestellt ist, die auf eine Oberfläche des Stahlblechs (S) einen linienförmigen Laser in einer Breitenrichtung des Stahlblechs (S) bestrahlt, um Farbe auf der Oberfläche des Stahlblechs (s) bereitzustellen, wobei die Bestrahlungseinheit (200) Folgendes einschließt:
eine Bestrahlungslagerungseinheit (220), die mit der Körpereinheit (100) gekoppelt ist;
ein Punktbestrahlungselement, das als mehrere Punktbestrahlungseinheiten (210) bereitgestellt ist, die parallel in der Bestrahlungslagerungseinheit (220) angeordnet sind, und den Laser ausstrahlen; und
einen linearen Linsenabschnitt (240), der bereitgestellt ist, um mit den Enden der mehreren Punktbestrahlungseinheiten (210), von denen der Laser ausgestrahlt wird, verbunden zu werden;
**dadurch gekennzeichnet, dass** die Bestrahlungslagerungseinheit (220) mit der Körpereinheit (100) gekoppelt ist; und
dass die Bestrahlungslagerungseinheit (220) ein Linienelement (221) einschließt, das bereitgestellt ist, um es den mehreren Punktbestrahlungseinheiten (210) zu ermöglichen, linear eingerichtet zu sein, und von denen eine Position einstellbar ist, um einer Breite des Stahlblechs (S) zu entsprechen.

2. Stahlblechfärbungsvorrichtung nach Anspruch 1, wobei die
Bestrahlungslagerungseinheit ferner Folgendes einschließt:
einen Motor (M, 222), der mit der Körpereinheit (100) gekoppelt ist, und wobei das Linienelement (221) mit einer Rotationswelle des Motors (M, 222) verbunden ist, um die Position mittels einer Rotation anzupassen.

3. Stahlblechfärbungsvorrichtung nach Anspruch 2, wobei das Linienelement (221) einen Mittelabschnitt in einer Breitenrichtung des Stahlblechs (S) aufweist, das mit der Rotationswelle des Motors (M, 222) verbunden ist.

4. Stahlblechfärbungsvorrichtung nach Anspruch 2, wobei das Linienelement als mehrere Linienelemente (221) bereitgestellt ist und bereitgestellt ist, um ausgedehnt zu werden, um der Breite des Stahlblechs (s) zu entsprechen.

5. Stahlblechfärbungsvorrichtung nach Anspruch 1, wobei die
Bestrahlungslagerungseinheit (210) ferner Folgendes einschließt:
einen Antriebszylinder (224), der mit der Körpereinheit (100) gekoppelt ist; und
eine Führungslasche (223), die ausgebildet ist, um von einem oberen Ende oder einem unteren Ende des Linienelements (221) herauszuragen und die gleitend in eine Führungsrinne (110a) eingeführt ist, die in der Körpereinheit (100) und dem Linienelement, das als mehrere Linienelemente (221) bereitgestellt ist, ausgebildet ist, die mit einem Ende des Antriebszylinders (224), der als mehrere Antriebszylinder (224) bereitgestellt ist, verbunden ist, um eine Position mittels linearer Bewegung anzupassen.

6. Stahlblechfärbungsvorrichtung nach Anspruch 1, wobei die Bestrahlungseinheit (200) in einem oberen Element (120) der Körpereinheit (100), in einer oberen Oberfläche des Stahlblechs (S) und/oder einem unteren Element (112) der Körpereinheit (100) in einer unteren Oberfläche des Stahlblechs (S) bereitgestellt ist.

7. Stahlblechfärbungsvorrichtung nach Anspruch 1, wobei wobei die Bestrahlungslagerungseinheit (220) Folgendes einschließt:
ein Oberflächenelement (225), das bereitgestellt ist, um zu ermöglichen, dass die mehreren Punktbestrahlungseinheiten (210) auf einer Ebene angeordnet werden.

8. Stahlblechfärbungsvorrichtung nach Anspruch 1, wobei die Bestrahlungseinheit (200) Folgendes einschließt:
einen Bestrahlungssteuerungsabschnitt (230), der mit einer Punktbestrahlungseinheit (210) elektrisch verbunden ist, und der individuell eine Energiedichte des Lasers, der von dem Punktbestrahlungselement, das als mehrere Punktbestrahlungseinheiten (210) bereitgestellt ist, bestrahlt wird.

9. Stahlblechfärbungsvorrichtung nach Anspruch 1, wobei die Körpereinheit Folgendes einschließt:
ein Basiselement (110); und
eine Führungswalze (120), die mit dem Basiselement (110) gekoppelt ist und bereitgestellt ist, um mit einer seitlichen Kante des Stahlblechs (S) in Berührung zu stehen, um die Bewegung des Stahlblechs (S) zu führen.

10. Stahlblechfärbungsverfahren unter Verwendung einer Stahlblechfärbungsvorrichtung nach einem der Ansprüche 1 bis 9, Folgendes umfassend:
einen Platzierungsablauf des Platzierens einer Bestrahlungseinheit (200), die eine Bestrahlungslagerungseinheit (220) einschließt;
Bestrahlen eines linienförmigen Lasers auf eine Übertragungsbahn eines Stahlblechs (S) durch einen Bestrahlungsablauf von Bestrahlungslasern von einem Punktbestrahlungselement, das als mehrere Punktbestrahlungseinheiten (210) bereitgestellt ist, die parallel zu der Bestrahlungslagerungseinheit (220) angeordnet sind, und gleichzeitiges Ausstrahlen der Laser durch einen linearen Linsenabschnitt (240), der mit den Enden der mehreren Punktbestrahlungseinheiten (210) verbunden ist, auf einen Bereich, der einer Breite des Stahlblechs (S) entspricht, das kontinuierlich übertragen wird, **dadurch gekennzeichnet, dass** der Platzierungsablauf Folgendes einschließt:
einen Breitenmessungsablauf des Messens der Breite des Stahlblechs (S); und
einen Positionsanpassungsablauf des Anpassens einer Position der Bestrahlungseinheit (200) an den Bereich, der der Breite des Stahlblechs (S), das gemessen wurde, entspricht.

## Revendications

1. Dispositif de coloration d'une plaque d'acier, comprenant :
une unité de corps (100) prévue sur un trajet de transfert d'une plaque d'acier (S) ; et
une unité d'irradiation (200) prévue dans l'unité de corps (100), laquelle irradie, sur une surface de la plaque d'acier (S), un laser en forme de ligne dans une direction de la largeur de la plaque d'acier (S) de manière à donner une couleur à la surface de la plaque d'acier (S), l'unité d'irradiation (200) comprenant :
une unité de support d'irradiation (220) couplée à l'unité de corps (100) ;
un élément d'irradiation ponctuelle prévu sous la forme d'une pluralité d'unités d'irradiation ponctuelle (210) disposées en parallèle dans l'unité de support d'irradiation (220), et émettant le laser ; et
une partie de lentille linéaire (240) prévue pour être reliée aux extrémités de la pluralité d'unités d'irradiation ponctuelle (210) à partir desquelles le laser est émis ;
**caractérisé en ce que** l'unité de support d'irradiation (220) est couplée à l'unité de corps (100) ; et
**en ce que** l'unité de support d'irradiation (220) comprend un élément de ligne (221) prévu pour permettre la disposition linéaire de la pluralité d'unités d'irradiation ponctuelle (210), et dont une position est réglable de façon à correspondre à une largeur de la plaque d'acier (S).

2. Dispositif de coloration d'une plaque d'acier selon la revendication 1, dans lequel l'unité de support d'irradiation comprend en outre :
un moteur (M, 222) couplé à l'unité de corps (100), et l'élément de ligne (221) est relié à un arbre de rotation du moteur (M, 222) pour régler la position par rotation.

3. Dispositif de coloration d'une plaque d'acier selon la revendication 2, dans lequel l'élément de ligne (221) a une partie centrale dans une direction de la largeur de la plaque d'acier (S) reliée à l'arbre de rotation du moteur (M, 222).

4. Dispositif de coloration d'une plaque d'acier selon la revendication 2, dans lequel l'élément de ligne est prévu sous la forme d'une pluralité d'éléments de ligne (221), et est prévu pour être étalé de façon à correspondre à la largeur de la (des) plaque(s) d'acier.

5. Dispositif de coloration d'une plaque d'acier selon la revendication 1, dans lequel l'unité de support d'irradiation (210) comprend en outre :
un cylindre d'entraînement (224) couplé à l'unité de corps (100) ; et
une patte de guidage (223) formée pour dépasser d'une extrémité supérieure ou d'une extrémité inférieure de l'élément de ligne (221), et insérée de manière coulissante dans une rainure de guidage (110a) formée dans l'unité de corps (100) et l'élément de ligne, prévue sous la forme d'une pluralité d'éléments de ligne (221), est reliée à une extrémité du cylindre d'entraînement (224), prévue sous la forme d'une pluralité de cylindres d'entraînement (224), de manière à régler une position par un mouvement linéaire.

6. Dispositif de coloration d'une plaque d'acier selon la revendication 1, dans lequel l'unité d'irradiation (200) est prévue dans au moins un élément supérieur (120) de l'unité de corps (100) dans une surface supérieure de la plaque d'acier (S) et un élément inférieur (112) de l'unité de corps (100) dans une surface inférieure de la plaque d'acier (S).

7. Dispositif de coloration d'une plaque d'acier selon la revendication 1, dans lequel l'unité de support d'irradiation (220) comprend :
un élément de surface (225) prévu pour permettre la disposition de la pluralité d'unités d'irradiation ponctuelle (210) sur un plan.

8. Dispositif de coloration d'une plaque d'acier selon la revendication 1, dans lequel l'unité d'irradiation (200) comprend :
une partie de commande d'irradiation (230) reliée électriquement à une unité d'irradiation ponctuelle (210), et ajustant individuellement la densité d'énergie du laser irradié par l'élément d'irradiation ponctuelle prévu sous la forme d'une pluralité d'unités d'irradiation ponctuelle (210).

9. Dispositif de coloration d'une plaque d'acier selon la revendication 1, dans lequel l'unité de corps comprend :
un élément de base (110) ; et
un rouleau de guidage (120) couplé à l'élément de base (110), et prévu pour être en contact avec un bord latéral de la plaque d'acier (S) de manière à guider le mouvement de la plaque d'acier (S).

10. Procédé de coloration d'une plaque d'acier utilisant un dispositif de coloration de l'acier tel que défini dans l'une quelconque des revendications 1 à 9, comprenant :
une opération de placement consistant à placer une unité d'irradiation (200) comprenant une unité de support d'irradiation (220) ;
l'irradiation d'un laser en forme de ligne sur un trajet de transfert d'une plaque d'acier (S) par une opération d'irradiation de lasers d'irradiation, à partir d'un élément d'irradiation ponctuelle prévu sous la forme d'une pluralité d'unités d'irradiation ponctuelle (210) disposées en parallèle dans l'unité de support d'irradiation (220) et émettant les lasers simultanément à travers une partie de lentille linéaire (240) reliée aux extrémités de la pluralité d'unités d'irradiation ponctuelle (210) sur une région correspondant à une largeur de la plaque d'acier (S) en transfert continu, **caractérisé en ce que** l'opération de placement comprend :
une opération de mesure de la largeur consistant à mesurer la largeur de la plaque d'acier (S) ; et
une opération de réglage de position consistant à régler une position de l'unité d'irradiation (200) à la région correspondant à la largeur de la plaque d'acier (S) ayant été mesurée.
